# EUROPEAN PATENT SPECIFICATION

(11) **EP 0 411 255 B1**
(45) Date of publication and mention of the grant of the patent: **11.11.1998**
(21) Application number: 90109069.6
(22) Date of filing: 14.05.1990
(51) Int. Cl.: G06F 12/14, G06F 1/00

(54) **Integrated circuit with CPU and memory system**
Integrierter Schaltkreis mit CPU und Speicheranordnung
Circuit integré avec CPU et système de mémoire

(30) Priority: 04.08.1989 GB 8917894
(43) Date of publication of application: 06.02.1991
(73) Proprietor: MOTOROLA, INC., Schaumburg, IL 60196 (US)
(72) Inventor: Schwarz, Roland Hermann, CH-1202 Genève (CH)
(74) Representative: Hudson, Peter David

(56) References cited:
- US-A- 4 590 552
- US-A- 4 698 750
- ELEKTRONIK, vol. 37, no. 22, October 1988, pages 204,206,208; V. TIMM: "Mit einem EEPROM an Bord"
- IDEM

## Description

This invention relates to a memory system having security against unauthorised accessing of the contents of the memory system. More particularly, the invention relates to a memory system for use with a microprocessor.

It is most desirable with microprocessors, having memories integrated on the same chip, to have some sort of security feature to protect the content of the memories from access by unauthorised persons. Generally, for most microprocessor applications, the memories will include non-volatile Electrically Erasable Read Only Memory (EEPROM) for storing data in a non-volatile manner and in some cases the application program.

For such applications, after processing of the microprocessor, the microprocessor is programmed to enter a test mode in order to test that it is functioning correctly. However, on entering a test mode, the entire contents of the EEPROM may be accessed by an external device under the control of the microprocessor: the microprocessor reads-out the contents of the EEPROM to an output port from which it can be externally accessed. Thus, an unauthorised person, having programmed the microprocessor to enter the test mode, can access the data and application program if it is stored in the EEPROM under the control of the microprocessor.

Typically, the EEPROM memory comprises a byte array and a well known method for protecting the contents of the EEPROM against unauthorised accessing during a test mode uses one bit of the byte array (hereinafter referred to as the security bit). The security bit is programmed into one of two states: an active state or an erased state. When the security bit is in the erased state the test mode can be entered into thereby allowing for the contents of the EEPROM to be externally accessed from the output port. However, when the security bit is in the active state the test mode cannot be entered into and thus the content of the EEPROM is secure. Thus, the microprocessor can be tested by the manufacturer and/or the user and then the contents of the EEPROM can be secured against external access by programming the security bit to the active state using a simple program.

Once the microprocessor has been tested and the security bit programmed, the microprocessor verifies that the security bit in the EEPROM has been programmed to the active state, which may in some applications be a specifically defined value. If the security bit is not defined (i.e. not in the active state), the microprocessor can be programmed to enter a bootstrap mode by way of specific signals on selected pins of the microprocessor.

On entering the bootstrap mode the entire EEPROM content will be erased, including the security bit, thus allowing access to the test mode. Once the EEPROM is completely erased, the programming operation of the bootstrap mode is entered into whereby the EEPROM is programmed including the security bit which is programmed to the active state. Once the security bit has been programmed to the active state, the security bit can only be erased if the microprocessor enters a bootstrap mode.

This method of using a security bit can secure the application program and data if they are both stored in EEPROM. However, with the high volume production of microprocessors and since EEPROM memory is considerably more expensive than non-volatile Read Only Memory (ROM), it is not economical to store all the application program in EEPROM. Therefore, as a result, some microprocessors use both ROM and EEPROM on the same chip: the ROM for storing the application program and the EEPROM for storing data.

For such microprocessors, the content of the EEPROM is protected by way of the security bit which prevents the microprocessor from entering the test mode. However, by erasing the content of the EEPROM during a bootstrap mode, which erases the security bit thereby allowing access to the test mode, the content of the ROM can be accessed during the test mode. Thus, an unauthorised person need only provide the specific signals to the selected pins of the microprocessor in order to enter the bootstrap mode and hence gain access to the application program stored in the ROM.

In order to enhance the security of the ROM and EEPROM it is possible to write a few of the sub-routines of the application program to the EEPROM in order to avoid allowing access to the complete program following entry to the bootstrap mode. However, this has the disadvantage in that the routines of the application program stored in the EEPROM are erased during the bootstrap mode which can affect the operation of the microprocessor. Another disadvantage is that invaluable memory space of the expensive EEPROM must be used to store the routines instead of data which is written to and read from the EEPROM during operation of the microprocessor. In addition, many applications require a greater degree of security for the application than merely storing some of the routines in the EEPROM: it is still possible for an unauthorised person to gain access to a large section of the application program in the ROM.

US-A-4698750 describes an integrated circuit microcomputer with EEPROM, having a number of modes of operation. In one mode, the EEPROM can be read externally. A security bit, when set, prevents this mode from being entered.

Electronik, vol.37, no.22. Oct 1988, p.204, 206, 208, V. Timm: "Mit einem EEPROM an Bord", describes a memory system including a ROM and EEPROM. The ROM contents cannot be read externally when a bit in the mask of the ROM code is set. The EEPROM is protected by a security byte, which can only be deleted in conjunction with the entire contents of the EEPROM.

In accordance with the present invention as defined in claim 1 there is provided an integrated circuit comprising a central processing unit and a memory system for storing data, said memory system comprising: first alterable memory means; second non-alterable memory means; and data bus means coupled to said central processing unit and to said first and second memory means for allowing external access to data stored in said first and second memory means during a test mode of operation and for allowing erasure of the contents of said first alterable memory means during a bootstrap mode of operation, said first alterable memory means comprising first security means programmable to a predetermined active state wherein said central processing unit prevents access by a device external to the integrated circuit to the data stored in said first alterable memory means and second non-alterable memory means by preventing said test mode of operation to be entered into when said first security means has said predetermined active state, and said first alterable memory means further comprising second security means programmable to a predetermined state, wherein said central processing unit prevents said bootstrap mode of operation being entered into when said first security means has said predetermined active state and said second security means has said predetermined state, thereby preventing erasure of the contents of said first alterable memory means.

Thus it will be appreciated that since the present invention uses one or more bytes of non-volatile EEPROM each programmed to have specifically defined values in conjunction with a security bit to protect the contents of both the ROM and EEPROM, the present invention provides enhanced security against unauthorised accessing of the data contents of the memory.

In addition, it will be appreciated that since the present invention is relatively straightforward to implement security can be enhanced cost effectively.

Two memory systems in accordance with the present invention will now be described, by way of example only, with reference to the accompanying drawings in which:
Figure 1 is a block schematic diagram showing part of a memory system of a microprocessor having non-volatile memory incorporating the present invention;
Figure 2 shows a descriptive diagram of one byte of the non-volatile memory of Figure 1;
Figure 3 comprises a flowchart showing the implementation of a first embodiment of the present invention;
Figure 4 is a flowchart showing the operation of the first embodiment of the present invention;
Figure 5 is a flowchart showing the implementation of a second embodiment of the present invention; and
Figure 6 is a flowchart showing the operation of the second embodiment of the present invention.

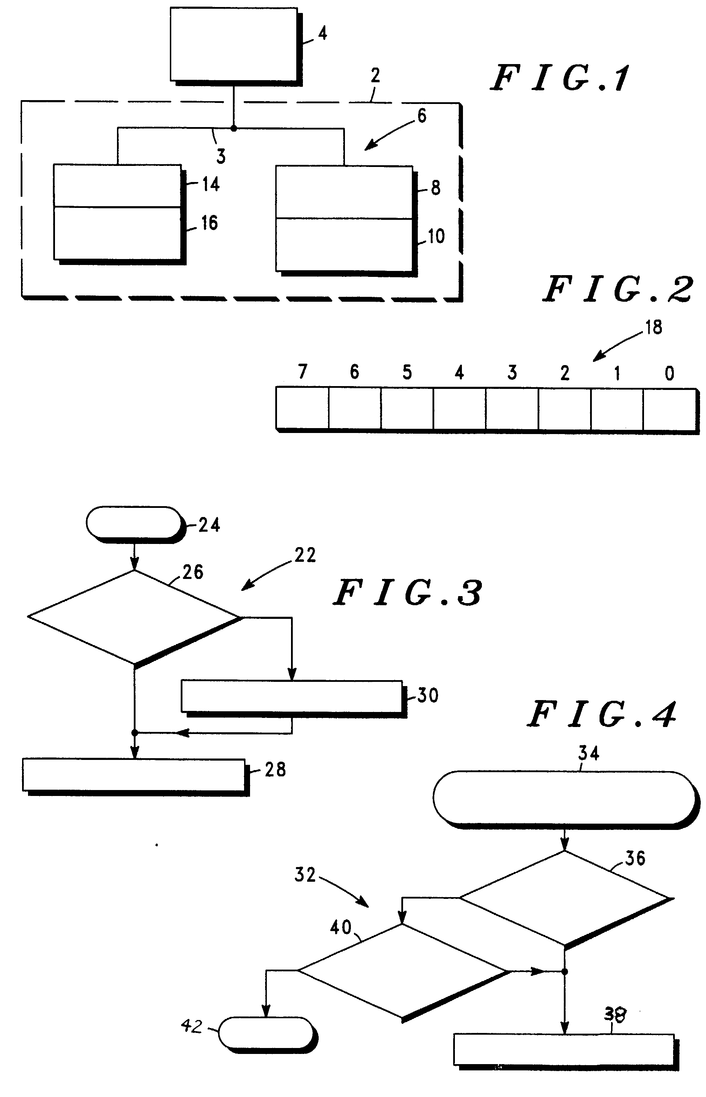

Figure 1 shows part of a microprocessor comprising a Central Processing Unit (CPU) 4 and a memory system 2. The memory system 2 comprises non-volatile EEPROM 6, ROM 14 and bootstrap ROM 16. The CPU 4 communicates with the EEPROM 6, ROM 14 and bootstrap ROM 16 via an address and data bus 3.

In a preferred embodiment the EEPROM 6 is a 256 byte array and is arranged in two parts: an options register 10 and a first data memory 8. The first data memory 8 uses 255 bytes of the EEPROM memory 6 to store data. The options register 10 uses one byte of the EEPROM memory 6 and contains the secure functions for the EEPROM 6.

ROM 14 is a 5952 byte array and stores the application program. The bootstrap ROM 16 is a 368 byte array and contains a bootstrap program which can be used to program EEPROM 6.

Figure 2 shows a description of each bit of the byte 18 of the options register 10 of the EEPROM 6. An unauthorised person can program the microprocessor to enter the test mode and hence gain access to the contents of the EEPROM 6 by applying the specific signals to the selected pins (not shown) of the microprocessor. As discussed above in the introduction, in order to protect the data content of the EEPROM 6 the byte 18 includes a security bit SEC. Once the test mode is initiated the microprocessor firstly verifies the state of the security bit SEC and if the security bit is in the active state, the test mode cannot be entered into thereby securing the contents of EEPROM 6 and ROM 14. If however the security bit SEC is in an erased state the microprocessor can enter the test mode which allows external access to the contents of EEPROM 6 and ROM 14.

The security bit SEC is generally programmed in the active state by the user after first testing the microprocessor device and once programmed the security bit can only be erased if the microprocessor enters a bootstrap mode. The microprocessor can be programmed to enter the bootstrap mode on application of specific signals to selected pins (not shown) of the microprocessor. On entering the bootstrap mode, the bootstrap program stored in the bootstrap ROM 16 is executed whereby the EEPROM 6 is erased including the security bit SEC. Thus, the contents of ROM 14 can be externally accessed. Once the EEPROM 6 is completely erased the programming operation of the bootstrap program follows.

In order to increase the degree of security of the memory system 2 by protecting the content of the ROM 14 and bootstrap ROM 16, in the preferred embodiment of the invention one byte of the first memory 8 (hereinafter referred to as VALSEC byte) is used in conjunction with the security bit SEC of the options register 10 in order to prevent the microprocessor from entering the bootstrap mode.

The VALSEC byte can be any one byte of the byte array of the first data memory 8 and its location is selected at the time of manufacturing. However, unless the VALSEC byte has a specifically defined value, the VALSEC byte can be used by the application program, that is, data can be written to the VALSEC byte and the microprocessor can still enter the bootstrap mode.

Generally, the VALSEC byte is programmed to a specifically defined value by the user of the microprocessor since this allows the user to test the microprocessor via the bootstrap mode prior to programming the VALSEC byte. However, the manufacturer of the microprocessor can also program the VALSEC byte. Having tested the device and once the security bit has been programmed in the active state, the user programs the VALSEC byte by way of a simple routine stored in the ROM 14. As an alternative, the VALSEC byte could be programmed with the specifically defined value on the first power up of the microprocessor after testing.

The user program routine for programming one VALSEC byte is illustrated in the flowchart 22 of Figure 3.

The program starts at block 24. A check to see whether the VALSEC byte is specifically defined is initiated at block 26. If the VALSEC byte is defined the user program (i.e. the application program) is executed at block 28. If the VALSEC byte is not defined the routine branches to program the VALSEC byte to a specifically defined value, at block 30. The user program is then executed at block 28.

If the VALSEC byte has a specifically defined value and the security bit SEC is in the active state, access to the bootstrap mode is prohibited. Thus, since access to the program section used to erase the EEPROM 6 is prevented the contents of the EEPROM 6, ROM 14 and bootstrap ROM are secured. If, however, the security bit is in the erased state then the EEPROM 6 and ROM 14 contents are not secured regardless of the value of the VALSEC byte.

Figure 4 is a flowchart 32 illustrating the initialisation of the bootstrap mode of operation.

The program starts at block 34. A check to see whether the security bit SEC is in the active state is initiated at block 36. If the security bit SEC is not in the active state the bootstrap program is executed at 38. If the security bit is in the active state, the routine branches to determine whether the VALSEC byte has a specifically defined value, block 40. If the VALSEC byte has the specifically defined value the bootstrap program is aborted at 42 thereby preventing access to the program section used to erase the EEPROM 6. If the VALSEC byte does not have a defined value the bootstrap program is executed at block 38.

Thus, once the VALSEC byte has been programmed with the specifically defined value and the security bit is in the active state the microprocessor cannot enter the bootstrap program and hence the VALSEC byte and the security bit cannot be erased thereafter by an unauthorised person.

It will be appreciated that although the specific example described herein uses one VALSEC byte of the non-volatile EEPROM to provide another level of security in the memory system, two or more VALSEC bytes of the non-volatile EEPROM could also be used. Each of the VALSEC bytes can be programmed with different specifically defined values. An advantage of using two or more VALSEC bytes is that the probability that all the VALSEC bytes are programmed with their respective specifically defined values by mistake during manufacture is considerably reduced.

A second embodiment of the invention, which is similar to the embodiment described with reference to Figures 1-4 except that two bytes of EEPROM 6 are used, will now be described.

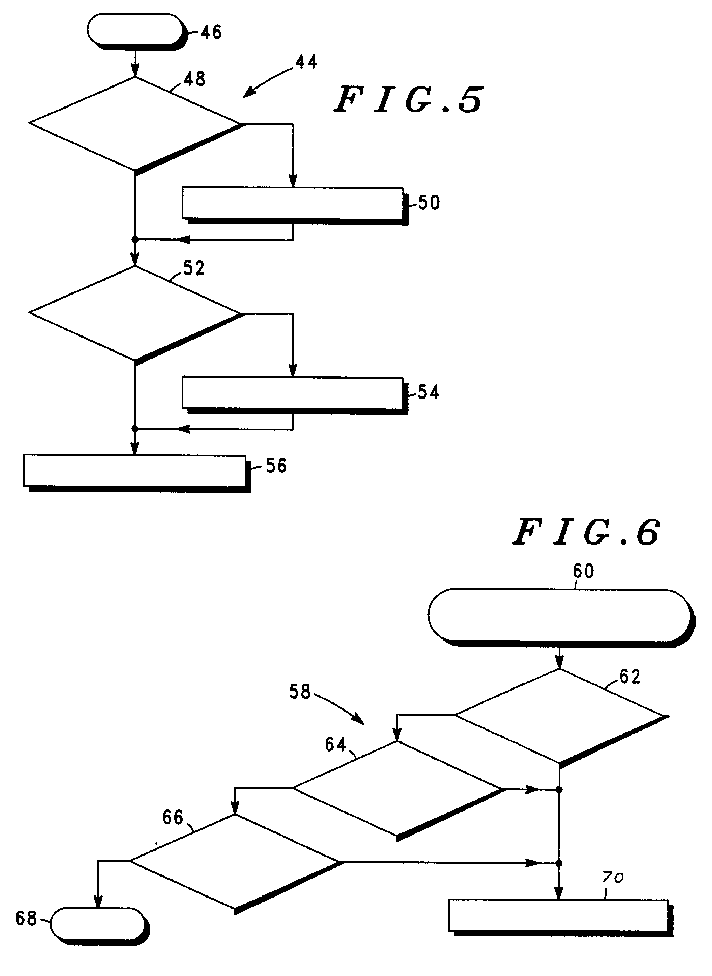

The user program routine for programming two VALSEC bytes is illustrated in the flowchart 44 of Figure 5.

The program starts at block 46. A check to see whether the first VALSEC byte (VALSEC1) has a first specifically defined value is initiated at block 48.

If the first VALSEC byte is defined, a check to see whether the second VALSEC byte (VALSEC2) has a specifically defined value is initiated at 52. If the first VALSEC byte is not defined the routine branches to program the first VALSEC byte to the first specifically defined value, at block 50. The routine then returns to initiate a check at block 52 to see whether the second VALSEC byte has a second specifically defined value. If the second VALSEC byte is defined the user program is executed at block 56. If the second VALSEC byte is not defined the routine branches to program the second VALSEC byte to the second specifically defined value at block 54. The user program is then executed, block 56.

Figure 6 is a flowchart 58 illustrating the initialisation of the bootstrap mode of operation for the second embodiment of the invention.

The program starts at block 60. A check to see whether the security bit SEC is in the active state is initiated at 62. If the security bit SEC is not in the active state the bootstrap program is executed at block 70. If the security bit is in the active state, the routine branches to determine whether the first VALSEC byte has a first specifically defined value, block 64. If the first VALSEC byte is not defined the bootstrap program is executed at block 70. If the first VALSEC byte is defined, a check is then initiated at block 66 to see whether the second VALSEC byte has a second specifically defined value. If the second VALSEC byte is not defined the bootstrap program is executed at block 70. If the second VALSEC byte has the second specifically defined value the bootstrap program is aborted at block 68 thereby preventing the bulk erasure of EEPROM 6.

In summary, by using one or more byte locations in the non-volatile EEPROM of the memory system, which can be programmed with specifically defined values, in conjunction with the security bit, the present invention provides enhanced security for the data stored in the memory system.

The specific examples of the invention have been described wherein all the application program is stored in the ROM. However, it will be appreciated that the present invention can also be used to provide enhanced security where part of the application program is written to the EEPROM.

## Claims

1. An integrated circuit comprising a central processing unit (4) and a memory system (2) for storing data, said memory system (2) comprising:
first alterable memory means (6);
second non-alterable memory means (14,16); and
data bus means (3) coupled to said central processing unit (4) and to said first (6) and second (14,16) memory means for allowing external access to data stored in said first (6) and second (14,16) memory means during a test mode of operation and for allowing erasure of the contents of said first alterable memory means during a bootstrap mode of operation,
said first alterable memory means (6) comprising first security means programmable to a predetermined active state wherein said central processing unit (4) prevents access by a device external to the integrated circuit to the data stored in said first alterable memory means (6) and second non-alterable memory means by preventing said test mode of operation to be entered into when said first security means has said predetermined active state, and
said first alterable memory means (6) further comprising second security means programmable to a predetermined state, wherein said central processing unit (4) prevents said bootstrap mode of operation being entered into when said first security means has said predetermined active state and said second security means has said predetermined state, thereby preventing erasure of the contents of said first alterable memory means (6).

2. An integrated circuit according to claim 1 wherein said first alterable memory means (6) comprises a plurality of bytes of cells, and said first security means comprises one cell of one of said plurality of bytes of cells, said one cell having a predetermined value when said first security means is programmed to said predetermined active state.

3. An integrated circuit according to claim 2 wherein said second security means (14,16) comprises at least one byte of said bytes of cells, said at least one byte having a predetermined value when said second security means is programmed to said predetermined state.

4. An integrated circuit according to claim 1, 2 or 3 further comprising verification means for verifying whether said first security means and said second security means are programmed to said predetermined active state and said predetermined state respectively and in response thereto for preventing external access to said data of both said first and said second memory means.

5. An integrated circuit according to claim 1, 2, 3 or 4 wherein said first alterable memory means (6) comprises non-volatile EEPROM.

6. An integrated circuit according to claims 1, 2, 3, 4 or 5 wherein said second non-alterable memory means (14,16) comprises ROM.

## Patentansprüche

1. Integrierte Schaltung mit zentraler Verarbeitungseinheit (4) und Speichersystem (2) zum Speichern von Daten, wobei das Speichersystem (2) beinhaltet:
einen ersten, veränderbaren Speicher (6);
einen zweiten, nicht veränderbaren Speicher (14, 16); und
einen Datenbus (3) gekoppelt an die zentrale
Verarbeitungseinheit (4) und an den ersten Speicher (6) sowie an den zweiten Speicher (14, 16) zum Ermöglichen eines externen Zugriffs auf Daten, die in dem ersten Speicher (6) und in dem zweiten Speicher (14, 16) gespeichert sind in einer Testbetriebsart und zum Ermöglichen des Löschens des Inhalts des ersten, veränderbaren Speichers (6) während einer Ladebetriebsart,
wobei der erste, nicht veränderbare Speicher (6) ein erstes Sicherheitsmittel hat, das in einen vorher bestimmten aktiven Zustand programmierbar ist, in dem die zentrale Verarbeitungseinheit (4) den Zugriff durch ein Gerät außerhalb der integrierte Schaltung auf die Daten, die im ersten, veränderbaren Speicher und im zweiten, nicht veränderbaren Speicher gespeichert sind, verhindert, indem der Eintritt in die Testbetriebsart verhindert wird, wenn das Sicherheitsmittel diesen vorherbestimmten aktiven Zustand aufweist,
wobei weiterhin der erste, veränderbare Speicher (6) ein zweites Sicherheitsmittel hat, das in einen vorherbestimmten Zustand programmiert werden kann,
wobei die zentrale Verarbeitungseinheit (4) den Eintritt in die Ladebetriebsart verhindert, wenn das erste Sicherheitsmittel den vorherbestimmten aktiven Zustand aufweist und das zweite Sicherheitsmittel den vorherbestimmten Zustand aufweist, so daß das Löschen des Inhalts des ersten, veränderbaren Speichers (6) verhindert wird.

2. Integrierte Schaltung nach Anspruch 1 in der der erste, nicht veränderbare Speicher (6) eine Anzahl von Bytes in Zellen hat, und das erste Sicherheitsmittel eine Zelle mit einem Byte der Anzahl der Bytes der Zellen hat, diese eine Zelle einen vorherbestimmten Wert aufweisend, wenn das erste Sicherheitsmittel in den vorherbestimmten aktiven Zustand programmiert ist.

3. Integrierte Schaltung nach Anspruch 2 in der das zweite Sicherheitsmittel (14, 16) mindestens ein Byte der Bytes der Zellen aufweist, das mindestens eine Byte einen vorherbestimmten Wort aufweisend, wenn das zweite Sicherheitsmittel in den vorherbestimmten Zustand programmiert ist.

4. Integrierte Schaltung nach Ansprüchen 1, 2 oder 3, im weiteren aufweisend einen Verfikator zum Verifizieren, daß das erste Sicherheitsmittel und das zweite Sicherheitsmittel in den vorherbestimmten aktiven Zustand bzw. vorherbestimmten Zustand programmiert sind, und zum dementsprechenden Verhindern eines externen Zugriffs auf die Daten sowohl im ersten als auch im zweiten Speicher.

5. Integrierte Schaltung nach Ansprüchen 1, 2, 3, oder 4, in der der erste, veränderbare Speicher (6) einen nichtflüchtigen EEPROM aufweist.

6. Integrierte Schaltung nach Ansprüchen 1, 2, 3, 4 oder 5, in der der zweite, nicht veränderbare Speicher (14, 16) einen ROM aufweist.

## Revendications

1. Circuit intégré comprenant une unité centrale de traitement (4) et un système de mémoire (2) servant à stocker des données, ledit système de mémoire (2) comprenant :
un premier moyen formant une mémoire modifiable (6) ;
un deuxième moyen formant une mémoire non modifiable (14, 16) ; et
un moyen formant un bus de données (3) couplé à ladite unité centrale de traitement (4) et auxdits premier moyen (6) et deuxième moyen (14, 16) formant des mémoires, afin de permettre l'accès, depuis l'extérieur, aux données stockées dans lesdits premier et deuxième moyens formant des mémoires (6 et 14, 16) pendant un mode de fonctionnement en contrôle et de permettre l'effacement du contenu dudit premier moyen formant une mémoire modifiable pendant un mode de fonctionnement en amorçage,
ledit premier moyen qui forme une mémoire modifiable (6) comprenant un premier moyen de sécurité programmable dans un état actif prédéterminé, où ladite unité centrale de traitement (4) empêche l'accès, par un dispositif extérieur au circuit intégré, aux données stockées dans ledit premier moyen qui forme une mémoire modifiable (6) et dans ledit deuxième moyen qui forme une mémoire non modifiable en empêchant le passage dans ledit mode de fonctionnement en contrôle lorsque ledit premier moyen de sécurité possède ledit état actif prédéterminé, et
ledit premier moyen qui forme une mémoire modifiable (6) comprenant en outre un deuxième moyen de sécurité programmable dans un état prédéterminé, où ladite unité centrale de traitement (4) empêche le passage dans ledit mode de fonctionnement en amorçage lorsque ledit premier moyen de sécurité possède ledit état actif prédéterminé et que ledit deuxième moyen de sécurité possède ledit état prédéterminé, de sorte que l'effacement du contenu dudit premier moyen formant une mémoire modifiable (6) est empêché.

2. Circuit intégré selon la revendication 1, où ledit premier moyen formant une mémoire modifiable (6) comprend une pluralité d'octets de cellules, et ledit premier moyen de sécurité comprend une unique cellule d'un unique octet de ladite pluralité d'octets de cellules, ladite cellule unique ayant une valeur prédéterminée lorsque ledit premier moyen de sécurité est programmé dans ledit état actif prédéterminé.

3. Circuit intégré selon la revendication 2, où ledit deuxième moyen formant une mémoire (14, 16) comprend au moins un desdits octets de cellules, ledit ou lesdits octets ayant une ou des valeurs prédéterminées lorsque ledit deuxième moyen de sécurité est programmé dans ledit état prédéterminé.

4. Circuit intégré selon la revendication 1, 2 ou 3, comprenant en outre un moyen de vérification servant à vérifier si ledit premier moyen de sécurité et ledit deuxième moyen de sécurité sont programmés respectivement dans ledit état actif prédéterminé et dans ledit état prédéterminé, et, en réponse à cette vérification, à empêcher un accès externe auxdites données desdits premier et deuxième moyens formant des mémoires.

5. Circuit intégré selon la revendication 1, 2, 3 ou 4, où ledit premier moyen formant une mémoire modifiable (6) comprend une EEPROM rémanente.

6. Circuit intégré selon la revendication 1, 2, 3, 4 ou 5, où ledit deuxième moyen formant une mémoire non modifiable (14, 16) comprend une ROM.
